# EUROPÄISCHE PATENTSCHRIFT

(11) **EP 2 169 796 B1**
(45) Veröffentlichungstag und Bekanntmachung des Hinweises auf die Patenterteilung: **04.03.2015**
(21) Anmeldenummer: 09075392.2
(22) Anmeldetag: 26.08.2009
(51) Int. Cl.: H02G 3/04, H02G 3/00

(54) **kabelbahn**
Cable path
Bande de câble

(30) Priorität: 25.09.2008 DE 102008048951
(43) Veröffentlichungstag der Anmeldung: 31.03.2010
(73) Patentinhaber: PUK-Werke KG Kunststoff-Stahlverarbeitung GmbH & Co., 12057 Berlin (DE)
(72) Erfinder: Schühle, Ullrich, Dr., 14532 Kleinmachnow (DE); Vogler, Erik, 16552 Schildow (DE)
(74) Vertreter: Jungblut, Bernhard Jakob

(56) Entgegenhaltungen:
- EP-A1- 1 143 154
- GB-A- 2 443 453
- US-A- 5 580 014
- US-A- 5 769 365

## Beschreibung

Gebiet der ErfindungDie Erfindung betrifft eine Kabelbahn mit einem Kabelleiter, welcher zwei zueinander gegenüberliegende, in im Wesentlichen in horizontaler Richtung längs erstreckte Seitenwände aufweist, wobei die Seitenwände im Bereich ihrer unteren Kante über eine Mehrzahl von in Richtung der Längserstreckung der Seitenwände voneinander beabstandete Verbindungsstege oder einen Boden miteinander verbunden sind, mit zumindest einem im Wesentlichen orthogonal zur Längserstreckung der Seitenwände und im Wesentlichen horizontal verlaufenden Träger, wobei der Kabelleiter auf dem Träger aufliegt, und mit Befestigungsmitteln zum Befestigen der Seitenwände an dem Träger.

### Stand der Technik und Hintergrund der Erfindung

Kabelbahnen des eingangs genannten Aufbaus sind vielfältig bekannt, beispielsweise aus dem Katalog der Firma PUK-Werke KG 2008/02, Seiten D3 und D5. Diese Kabelbahnen dienen dazu, Kabel und sonstige Leitungen zu kanalisieren, zu führen und zu halten. Kabelbahnen des insofern bekannten Aufbaus haben sich grundsätzlich sehr gut bewährt.

Ein grundsätzliches Problem bei Kabelbahnen des Standes der Technik ist die Stabilität in den Bereichen, wo die unteren Kanten der Seitenwände auf den Trägern aufliegen. In diesen Bereichen muss die gesamte Gewichtslast der Kabelbahn, einschließlich der enthaltenen Kabel, Rohre und dergleichen, in den Träger eingeleitet werden. Dies wird einerseits erreicht durch geeignete Profilierung der Seitenwände und andererseits durch Wahl einer hinreichend großen Wanddicke der Seitenwände.

Aus Gewichts- und Kostengründen wäre es jedoch wünschenswert, eine Kabelbahn des eingangs genannten Aufbaus zu schaffen, deren Seitenwände eine reduzierte Materialstärke aufweisen können bei gleichzeitig erhaltener statischer Stabilität. Alternativ wäre es wünschenswert, bei gleicher Materialstärke eine erhöhte statische Stabilität zu erreichen, beispielsweise um die Aufnahme einer höheren Gewichtslast bei unveränderten Materialkosten zu erreichen.

### Technisches Problem der Erfindung

Der Erfindung liegt daher das technische Problem zugrunde, eine Kabelbahn anzugeben, die eine erhöhte statische Belastbarkeit aufweist bei unveränderter Wandstärke der Seitenwände und/oder deren Seitenwände mit reduzierter Wandstärke ausgebildet werden können bei unverändert hoher statischer Belastbarkeit, insbesondere im Bereich des Auflagers auf einem Träger.

Grundzüge der Erfindung und bevorzugte Ausführungsformen Zur Lösung dieses technischen Problems lehrt die Erfindung, dass die Seitenwände als nach außen offene C-Profile mit einem Wandteil und zwei mit gegenüberliegenden Seiten des Wandteils verbundenen C-Schenkeln ausgebildet sind, dass die Befestigungsmittel ein Verstärkungselement umfassen, welches zwei Teilflächen aufweist, wobei eine erste Teilfläche im montierten Zustand außenseitig an dem Wandteil anliegt und hiermit verbunden ist und wobei eine zweite Teilfläche im montierten Zustand oberhalb oder unterhalb des auf dem Träger aufliegenden C-Schenkels anliegt, und dass die Befestigungsmittel erste Befestigungselemente zum Verbinden der ersten Teilfläche des Verstärkungselements mit dem Wandteil sowie zweite Befestigungsmittel zum Verbinden der zweiten Teilfläche des Verstärkungselements und/oder des auf dem Träger aufliegenden C-Schenkels mit dem Träger umfassen.

Mit der Erfindung wird eine erhebliche statische Verbesserung im Bereich des Auflagers des Kabelleiters auf dem Träger erreicht, da mittels des Verstärkungselements und dessen Befestigung an dem Wandteil eine erhebliche Verstärkung in jenem Bereich erfolgt, die auf dem Träger aufliegt. Dadurch kann der Kabelleiter eine höhere Gewichtslast aufnehmen, ohne dass dazu die Materialstärke der Seitenwände erhöht werden braucht, i.e. bei im wesentlichen unveränderten Materialkosten. Umgekehrt, bei gleichbleibender statischer Stabilität können die Seitenwände sogar mit reduzierter Materialstärke ausgebildet werden, wenn keine erhöhte Belastbarkeit benötigt wird, so dass letztendlich die Kabelbahn insgesamt erheblich leichter und kostengünstiger hergestellt werden kann. Letztendlich können im zweiten Fall mit einer erfindungsgemäßen Kabelbahn unter Umständen auch reduzierte statische Anforderungen an die Träger und deren Befestigung an einer Wandung gestellt werden.

Das erfindungsgemäße Konzept lässt sich in verschiedenen Ausführungsformen weiterbilden. In einer ersten Variante ist das Verstärkungselement mit im Wesentlichen L-förmigem Querschnitt ausgebildet, wobei ein L-Schenkel die erste Teilfläche und der andere L-Schenkel die zweite Teilfläche bildet, wobei das Verstärkungselement in das C-Profil der Seitenwand eingelegt ist, wobei die zweiten Befestigungsmittel ein Klemmelement umfassen, welches ein Befestigungsteil und ein Klemmteil aufweist, und wobei das Klemmteil die zweite Teilfläche sowie den auf dem Träger aufliegenden C-Schenkel übergreift und das Klemmteil mit dem Träger verbindbar ist.

In einer alternativen Variante ist das Verstärkungselement mit der Maßgabe ausgebildet, dass die erste Teilfläche vertikal verläuft, die zweite Teilfläche horizontal und zwischen dem auf dem Träger aufliegenden C-Schenkel und in einem Aufnahmeraum der Kabelbahn hinein verläuft, und dass die erste Teilfläche und die zweite Teilfläche über eine Verbindungsfläche miteinander verbunden sind, welche den auf dem Träger aufliegenden C-Schenkel umgreift, wobei die zweite Teilfläche im Aufnahmeraum mittels der zweiten Verbindungsmittel mit dem Träger verbindbar ist.

In der Regel werden die ersten Befestigungsmittel Mittel zum Verschrauben oder Vernieten umfassen, wobei in den ersten Teilflächen und den Wandteilen miteinander fluchtende Verbindungslöcher eingerichtet sind. In der Regel wird ein Verschrauben mittels Schrauben, beispielsweise Schlossschrauben, und Muttern erfolgen. Die Schrauben durchgreifen dann die miteinander fluchtenden Verbindungslöcher und fixieren so die erste Teilfläche mit dem Wandteil. Im Bereich dieser Verschraubung oder Vernietung erfolgt dann auch eine zusätzliche Lasteinleitung aus den Seitenwänden in die Verstärkungselemente.

In beiden Varianten muss eine Befestigung entweder des Klemmteils oder der zweiten Teilfläche (im Aufnahmeraum) mit dem Träger erfolgen. Sofern in dem Träger bereits Montagelöcher vorgesehen sind, kann dies im einfachsten Fall durch Verschrauben oder Vernieten erfolgen, wobei dann in dem Klemmteil bzw. in der zweiten Teilfläche Löcher oder Schlitze ausgebildet sind, welche mit den Montagelöchern im Träger fluchten. Oft sind jedoch Träger eingerichtet, welche keine Montagelöcher aufweisen, und die Einbringung von Montagelöchern ist auch unerwünscht. Bei Trägern handelt es sich typischerweise um sog. DoppelT-Träger, wobei dann die zweiten Befestigungsmittel anschraubbare Klemmstücke umfassen können. Da aus statischen Gründen ohnehin das Verstärkungselement und/oder das Klemmelement eine Längserstreckung aufweisen wird, welche höher als die Breite des Trägers ist, kann dann in den über die Breite des Träger hinausragenden Bereichen des Verstärkungselements oder des Klemmelements vorgesehen sein, Klemmbleche mit dem Verstärkungselement bzw. Klemmelement zu verschrauben, welche die einander gegenüberliegenden Außenkanten des T-Trägers umgreifen. Durch Anzug der Verschraubung erfolgt dann ein Festklemmen des Verstärkungselements bzw. des Klemmelements an dem Träger und so die Befestigung.

Bevorzugt ist, dass die Seitenwände aus einem Stahlwerkstoff, wie Normalstähle (ggf. verzinkt) oder Edelstähle, bestehen und eine Materialstärke von weniger als 1,5 mm, vorzugsweise weniger als 1,2 mm, 1,0 mm oder 0,8 mm, aufweisen. Dies gilt, wenn keine erhöhten Anforderungen an die Belastbarkeit gestellt werden. Ansonsten können die Materialstärken in üblichen Bereichen, beispielsweise 1,5 bis 2,5 mm, liegen, wobei dann eine erhöhte statische Belastbarkeit erreicht wird

Die Verstärkungselemente bzw. Klemmelemente sind typischerweise als Bleche ausgebildet. Als Werkstoff kommt beispielsweise Stahl in Frage. Die Materialstärke der Verstärkungselemente bzw. Klemmelemente entsprechen den für die Seitenwände angegebenen Werten, können aber auch doppelt oder dreimal so hoch sein.

Im Folgenden wird die Erfindung anhand von lediglich Ausführungsbeispiele darstellenden Figuren näher erläutert. Es zeigen
- Figur 1:: eine schematische Aufsicht auf ein erfindungsgemäße Kabelbahn (a) sowie einen Querschnitt durch eine erfindungsgemäße Kabelbahn in Richtung A-A (b),
- Figur 2:: die Teilansichten im Bereich B der Figur 1a, und zwar eine Seitenansicht (a) sowie eine Querschnittansicht (b) einer ersten Variante der Erfindung und
- Figur 3:: die Teilansichten im Bereich B der Figur 1a, und zwar eine Seitenansicht (a) sowie eine Querschnittansicht (b) einer zweiten Variante der Erfindung.

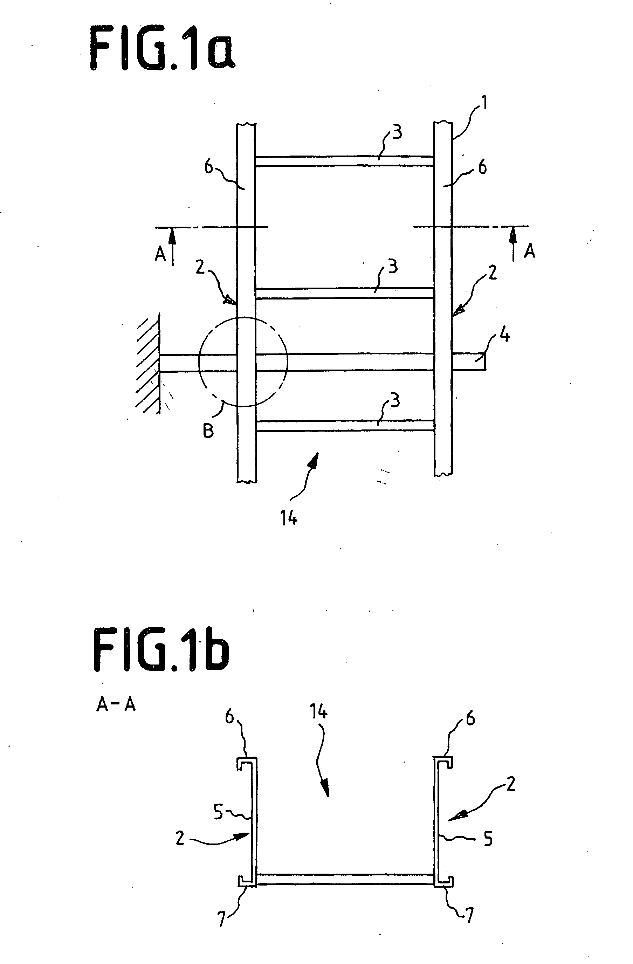

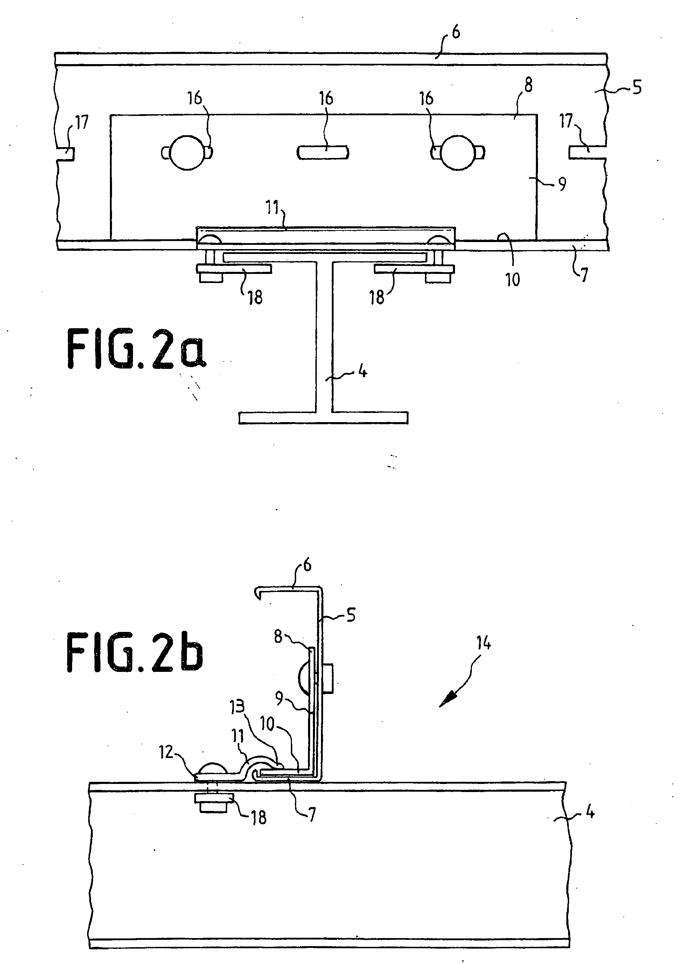

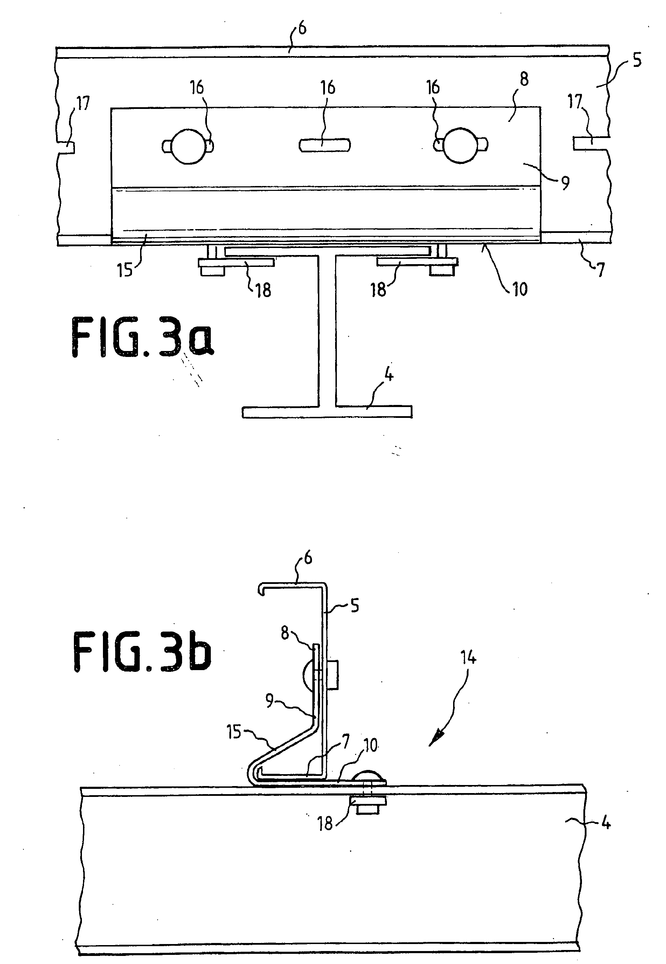

In der Figur 1 erkennt man eine Kabelbahn mit einem Kabelleiter 1, welcher zwei zueinander gegenüberliegende und im Wesentlichen in horizontaler Richtung längs erstreckte Seitenwände 2 aufweist. Die Seitenwände 2 sind als nach außen offene C-Profile mit einem Wandteil 5 und zwei mit den gegenüberliegenden Seiten des Wandteils 5 verbundene C-Schenkel 6, 7 ausgebildet. Im Bereich der unteren Kanten der Seitenwände 2 sind eine Mehrzahl von in Richtung der Längserstreckung der Seitenwände 2 voneinander beabstandete Verbindungsstege 3 oder ein Boden eingerichtet, wodurch die Seitenwände 2 miteinander statisch stabil verbunden sind. Des Weiteren erkennt man einen im Wesentlichen orthogonal zur Längserstreckung der Seitenwände und im Wesentlichen horizontal verlaufenden Träger 4, wobei der Kabelleiter 1 auf dem Träger 4 aufliegt. Der Übersichtlichkeit halber sind in der Figur 1 die Befestigungsmittel zum Befestigen der Seitenwände 2 an dem Träger 4 nicht dargestellt. Details hierzu sind jedoch in den folgend diskutierten Figuren 2 und 3 ersichtlich.

Den beiden Varianten der Figuren 2 und 3 ist gemeinsam, dass die Befestigungsmittel ein Verstärkungselement 8 umfassen, welches zwei Teilflächen 9, 10 aufweist, wobei eine erste Teilfläche 9 im montierten Zustand außenseitig an dem Wandteil 5 anliegt und hiermit verbunden ist und wobei eine zweite Teilfläche 10 im montierten Zustand oberhalb oder unterhalb des auf dem Träger 4 aufliegenden C-Schenkels 7 anliegt. Des Weiteren umfassen die Befestigungsmittel erste Befestigungselemente zum Verbinden der ersten Teilfläche 9 des Verstärkungselements 8 mit dem Wandteil 5 sowie zweite Befestigungsmittel zum Verbinden der zweiten Teilfläche 10 des Verstärkungselements 8 und/oder des auf dem Träger 4 aufliegenden C-Schenkels 7 mit dem Träger.

In der Variante der Figur 2 ist das Verstärkungselement 8 mit im Wesentlichen L-förmigem Querschnitt ausgebildet. Ein L-Schenkel bildet die erste Teilfläche 9 und der andere L-Schenkel die zweite Teilfläche 10. Das Verstärkungselement 8 ist in das C-Profil der Seitenwand 5 eingelegt. Die zweiten Befestigungsmittel umfassen des Weiteren ein Klemmelement 11, welches ein Befestigungsteil 12 und einen Klemmteil 13 aufweist. Dabei ist das Klemmteil 13 mit der Maßgabe ausgebildet, dass es die zweite Teilfläche 10 sowie den auf dem Träger aufliegenden C-Schenkel 7 übergreift und bei Verbindung des Klemmteils 13 mit dem Träger 4 die zweite Teilfläche 10 zusammen mit dem C-Schenkel 7 auf den Träger 4 presst und so klemmt.

In der Variante der Figur 3 ist das Verstärkungselement 8 mit der Maßgabe ausgebildet, dass die erste Teilfläche 9 vertikal verläuft, die zweite Teilfläche 8 horizontal und zwischen dem auf dem Träger 4 aufliegenden C-Schenkel 7 und in den Aufnahmeraum 14 der Kabelbahn hineinverläuft, wobei die erste Teilfläche 9 und die zweite Teilfläche 10 über eine Verbindungsfläche 15 miteinander verbunden sind. Dies wird insbesondere aus der Figur 3b deutlich. Man erkennt auch, dass die Verbindungsfläche 15 den auf dem Träger 4 aufliegenden C-Schenkel 7 umgreift. Die zweite Teilfläche 10 ist im Aufnahmeraum 14 mittels der zweiten Verbindungsmittel mit dem Träger 4 verbindbar.

Beiden Figuren 2 und 3 ist entnehmbar, dass die ersten Befestigungsmittel Schrauben und Muttern umfassen, welche miteinander fluchtende und horizontal verlaufende Langlöcher 16, 17 durchgreifen, die in der ersten Teilfläche 9 und dem Wandteil 5 eingerichtet sind.

Des Weiteren erkennt man, dass die zweiten Befestigungsmittel anschraubbare Klemmstücke 18 und Schrauben sowie Muttern zum Verschrauben der Klemmstücke 18 mit dem Klemmelement (Figur 2) bzw. dem Verstärkungselement (Figur 3) aufweisen. Dadurch werden die betreffenden Bauteile auf dem Träger 4 fixiert und' festgeklemmt .

## Patentansprüche

1. Kabelbahn mit einem Kabelleiter (1), welcher zwei einander gegenüberliegende und im Wesentlichen in horizontaler Richtung längs erstreckte Seitenwände (2) aufweist, wobei die Seitenwände (2) im Bereich ihrer unteren Kante über eine Mehrzahl von in Richtung der Längserstreckung der Seitenwände (2) voneinander beabstandete Verbindungsstege (3) oder einen Boden miteinander verbunden sind, mit zumindest einem im Wesentlichen orthogonal zur Längserstreckung der Seitenwände (2) und im Wesentlichen horizontal verlaufenden Träger (4), wobei der Kabelleiter (1) auf dem Träger (4) aufliegt, und mit Befestigungsmitteln zum Befestigen der Seitenwände (2) an dem Träger (4),
**dadurch gekennzeichnet,**
**dass** die Seitenwände (2) als nach außen offene C-Profile mit einem Wandteil (5) und zwei mit gegenüberliegenden Seiten des Wandteils (5) verbundenen C-Schenkeln (6, 7) ausgebildet sind,
**dass** die Befestigungsmittel ein Verstärkungselement (8) umfassen, welches zwei Teilflächen (9, 10) aufweist, wobei eine erste Teilfläche (8) im montierten Zustand außenseitig an dem Wandteil (5) anliegt und hiermit verbunden ist, und wobei eine zweite Teilfläche (10) im montierten Zustand oberhalb oder unterhalb des auf dem Träger (4) aufliegenden C-Schenkels (7) anliegt, und
**dass** die Befestigungsmittel erste Befestigungselemente zum Verbinden der ersten Teilfläche (9) des Verstärkungselements (8) mit dem Wandteil (5) sowie zweite Befestigungsmittel zum Verbinden der zweiten Teilfläche (10) des Verstärkungselements (8) und/oder des auf dem Träger (4) aufliegenden C-Schenkels (7) mit dem Träger (4) umfassen.

2. Kabelbahn nach Anspruch 1, **dadurch gekennzeichnet,**
**dass** das Verstärkungselement (8) mit im Wesentlichen L-förmigem Querschnitt ausgebildet ist, wobei ein L-Schenkel die erste Teilfläche (9) und der andere L-Schenkel die zweite Teilfläche (10) bildet, wobei das Verstärkungselement (8) in das C-Profil der Seitenwand (5) eingelegt ist, und
**dass** die zweiten Befestigungsmittel ein Klemmelement (11) umfassen, welches ein Befestigungsteil (12) und ein Klemmteil (13) aufweist, wobei das Klemmteil (13) die zweite Teilfläche (10) sowie den auf dem Träger (4) aufliegenden C-Schenkel (7) übergreift und wobei das Klemmteil (13) mit dem Träger (4) verbindbar ist.

3. Kabelbahn nach Anspruch 1, **dadurch gekennzeichnet,**
**dass** das Verstärkungselement (8) mit der Maßgabe ausgebildet ist, dass die erste Teilfläche (9) vertikal verläuft, die zweite Teilfläche (8) horizontal und zwischen dem auf dem Träger(4) aufliegenden C-Schenkel (7) und in einen Aufnahmeraum (14) der Kabelbahn hinein verläuft, und
**dass** die erste Teilfläche (9) und die zweite Teilfläche (10) über eine Verbindungsfläche (15) miteinander verbunden sind, welche den auf dem Träger (4) aufliegenden C-Schenkel (7) umgreift, wobei die zweite Teilfläche (10) im Aufnahmeraum (14) mittels der zweiten Verbindungsmittel mit dem Träger (4) verbindbar ist.

4. Kabelbahn nach einem der Ansprüche 1 bis 3, **dadurch gekennzeichnet, dass** die ersten Befestigungsmittel Mittel zum Verschrauben oder Vernieten umfassen und dass in der ersten Teilfläche (9) und dem Wandteil (5) miteinander fluchtende Verbindungslöcher (16, 17), vorzugsweise in Längserstreckung der Seitenwände (2) verlaufende Langlöcher, eingerichtet sind.

5. Kabelbahn nach einem der Ansprüche 1 bis 4, **dadurch gekennzeichnet, dass** die zweiten Befestigungsmittel anschraubbare Klemmstücke (18) und/öder Mittel zum Verschrauben oder Vernieten umfassen.

6. Kabelbahn nach einem der Ansprüche 1 bis 5, **dadurch gekennzeichnet, dass** die Seitenwände (5) aus einem Stahlwerkstoff und mit einer Materialstärke von weniger als 1,5 mm, vorzugsweise weniger als 1,2 mm, 1;0 mm oder 0,8 mm, ausgebildet sind.

## Claims

1. A cable tray including a cable conductor (1) having two opposite side walls (2) extending substantially longitudinally in a horizontal direction, the side walls (2) being connected to each other in the region of their lower edge by a plurality of connecting webs (3) spaced in the direction of the longitudinal extension of the side walls (2), or by a base, including at least one support (4) extending substantially perpendicularly to the longitudinal extension of the side walls (2) and substantially horizontally, the cable conductor (1) resting on the support (4), and including fixing means for fixing the side walls (2) at the support (4),
**characterized in**
**that** the side walls (2) are configured as outwardly open C profiles with a wall part (5) and two C legs (6, 7) connected to opposite sides of the wall part (5),
**that** the fixing means comprise a reinforcing element (8) having two partial surfaces (9, 10), a first partial surface (8) abutting in the assembled state on the outside of the wall part (5) and being connected thereto, and a second partial surface (10) abutting in the assembled state above or below the C leg (7) resting on the support (4), and
**that** the fixing means include first fixing elements for connecting the first partial surface (9) of the reinforcing element (8) with the wall part (5) and second fixing elements for connecting the second partial surface (10) of the reinforcing element (8) and/or of the C leg (7) resting on the support (4) with the support (4).

2. The cable tray according to claim 1, **characterized in**
**that** the reinforcing element (8) is formed with a substantially L-shaped cross section, one L leg forming the first partial surface (9) and the other L leg forming the second partial surface (10), said reinforcing element (8) being fitted in the C profile of the side wall (5), and
**that** the second fixing means include a clamping element (11) having a fixing part (12) and a clamping part (13), the clamping part (13) engaging over the second partial surface (10) as well as over the C leg (7) resting on the support (4), and the clamping part (13) being connectable with the support (4).

3. The cable tray according to claim 1, **characterized in**
**that** the reinforcing element (8) is designed with the proviso that the first partial surface (9) extends vertically, the second partial surface (8) extends horizontally and between the C leg (7) resting on the support (4) and into a receiving space (14) of the cable tray, and
**that** the first partial surface (9) and the second partial surface (10) are connected to each other by a connection surface (15), which encompasses the C leg (7) resting on the support (4), the second partial surface (10) in the receiving chamber (14) being connectable by the second connection means to the support (4).

4. The cable tray according to one of claims 1 to 3, **characterized in that** the first fixing means include means for screwing or riveting, and that in the first partial surface (9) and the wall part (5), aligned connection holes (16, 17), preferably oblong holes extending in the longitudinal extension of the side walls (2) are provided.

5. The cable tray according to one of claims 1 to 4, **characterized in that** the second fixing means include screw-on clamping pierces (18) and/or means for screwing or riveting.

6. The cable tray according to one of claims 1 to 5, **characterized in that** the side walls (5) are formed of a steel material and have a material thickness of less than 1.5 mm, preferably less than 1.2 mm, 1.0 mm or 0.8 mm.

## Revendications

1. Chemin de câbles comportant un conducteur de câble (1) ayant deux parois latérales (2) opposées s'étendant essentiellement longitudinalement dans une direction horizontale, les parois latérales (2) étant liées l'une à l'autre dans la zone de leur bord inférieur par une pluralité d'entretoises de liage (3) disposées à distance dans la direction de l'étendue longitudinale des parois latérales (2), ou par un fond, comportant au moins un support (4) s'étendant essentiellement orthogonalement à l'étendue longitudinale des parois latérales (2) et essentiellement horizontalement, le conducteur de câble (1) reposant sur le support (4), et comportant des moyens de fixation pour fixer les parois latérales (2) au support (4),
**caractérisé en ce**
**que** les parois latérales (2) sont réalisées comme des profils en C ouverts vers l'extérieur avec une partie de paroi (5) et deux branches en C (6, 7) liées à des côtés opposés de la partie de paroi (5),
**que** les moyens de fixation comportent un élément de renfort (8) ayant deux surfaces partielles (9, 10), une première surface partielle (8) s'appuyant à l'état monté à l'extérieur de la partie de paroi (5) et étant liée à celle-ci, et une deuxième surface partielle (10) s'appuyant à l'état monté au-dessus ou au-dessous de la branche en C (7) reposant sur le support (4), et
**que** les moyens de fixation comportent des premiers éléments de fixation pour lier la première surface partielle (9) de l'élément de renfort (8) à la partie de paroi (5) et des deuxièmes éléments de fixation pour lier la deuxième surface partielle (10) de l'élément de renfcrt (8) et/ou de la branche en C (7) reposant sur le support (4) au support (4).

2. Chemin de câbles selon la revendication 1, **caractérisé en ce**
**que** l'élément de renfort (8) est réalisé à une section essentiellement en L, une branche en L formant la première surface partielle (9) et l'autre branche en L formant la deuxième surface partielle (10), cet élément de renfort (8) étant disposé dans le profil en C de la paroi latérale (5), et
**que** les deuxièmes moyens de fixation comportent un élément de coincement (11) ayant une pièce de fixation (12) et une pièce de coincement (13), la pièce de coincement (13) chevauchant la deuxième surface partielle (10) aussi bien que la branche en C (7) reposant sur le support (4), et la pièce de coincement (13) pouvant être liée au support (4).

3. Chemin de câbles selon la revendication 1, **caractérisé en ce**
**que** l'élément de renfort (8) est réalisé de telle manière que la première surface partielle (9) s'étende verticalement, la deuxième surface partielle (8) s'étende horizontalement et entre la branche en C (7) reposant sur le support (4) et dans un logement de réception (14) du chemin de câbles, et
**que** la première surface partielle (9) et la deuxième surface partielle (10) sont liées l'une à l'autre par une surface de liage (15), qui entoure la branche en C (7) reposant sur le support (4), la deuxième surface partielle (10) dans la chambre de réception (14) pouvant être liée par les deuxièmes moyens de liage au support (4).

4. Chemin de câbles selon une des revendications 1 à 3, **caractérisé en ce que** les premiers moyens de fixation comportent des moyens pour vissage ou rivetage, et que dans la première surface partielle (9) et la partie de paroi (5), des trous de liage (16, 17) alignés, de préférence des trous oblongs s'étendant dans l'étendue longitudinale des parois latérales (2) sont prévus.

5. Chemin de câbles selon une des revendications 1 à 4, **caractérisé en ce que** les deuxièmes moyens de fixation comportent des pièces de coincement (18) à être vissées et/ou des moyens pour vissage ou rivetage.

6. Chemin de câbles selon une des revendications 1 à 5, **caractérisé en ce que** les parois latérales (5) sont réalisées en un matériau d'acier et ont une épaisseur du matériau de moins de 1,5 mm, de préférence moins de 1,2 mm, 1,0 mm ou 0,8 mm.
